# DEMANDE DE BREVET EUROPEEN

(11) **EP 0 656 678 A1**
(43) Date de publication de la demande: **07.06.1995**
(21) Numéro de dépôt: 94402721.8
(22) Date de dépôt: 29.11.1994
(51) Int. Cl.: H02H 3/38, H02H 7/26

(54) **Dispositif détecteur de défauts homopolaires sur un réseau de distribution électrique**

(30) Priorité: 02.12.1993 FR 9314451
(71) Demandeur: SA. ETABLISSEMENTS BARDIN, F-92100 Boulogne-Billancourt (FR)
(72) Inventeur: Drouere, Bernard, F-28110 Luce (FR)
(74) Mandataire: Martin, Jean-Jacques

(57) **Abrégé**

La présente invention concerne un dispositif de détection de défauts homopolaires sur un réseau de distribution électrique, caractérisé par le fait qu'il comprend :
- un détecteur (112) de passage à zéro de la tension homopolaire (V0) et
- un démodulateur de phase (122) du courant homopolaire (I0), piloté par un signal issu du détecteur de passage à zéro (112).

## Description

La présente invention concerne le domaine de la détection de défauts homopolaires, c'est à dire les défauts entre phases et terre, dans un réseau de distribution électrique.

On a déjà proposé divers dispositifs de détection de défauts homopolaires.

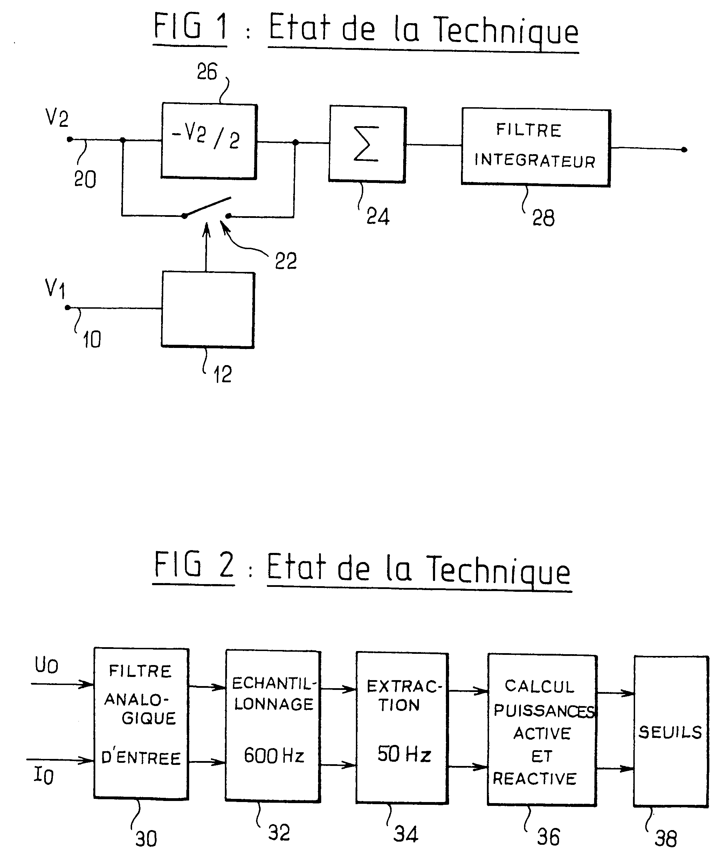

En particulier on a proposé des dispositifs du type représenté sur la figure 1, conçus pour mesurer la puissance active homopolaire sur un réseau.

On aperçoit sur cette figure 1, un dispositif comprenant deux entrées 10 et 20, qui reçoivent respectivement, la première une tension V1 proportionnelle à la tension homopolaire U0, la seconde une tension V2 proportionnelle au courant homopolaire I0. Un oscillateur astable 12 d'une fréquence de l'ordre de 10kHz piloté par la tension V1 commande un interrupteur électronique 22. Le facteur de forme du signal de sortie de l'oscillateur 12 est lié à V1 par la relation F = (1/2) (1 + k V1).

L'état de l'interrupteur 22, fermé ou ouvert, dépend de la phase du signal de sortie de l'oscillateur 12.

Cet interrupteur 22 commute le signal d'entrée V2.

Un sommateur 24 additionne le signal V2 ainsi découpé et le signal - V2/2 issu d'une cellule 26.

Le signal de sortie du sommateur 24 est ensuite intégré par un filtre 28. La valeur du signal de sortie intégré sur une période du signal de découpage est ainsi égale à Vs = (1/2) k.V1.V2.

Si l'on admet que la fréquence de l'oscillateur 12 est grande vis à vis des fréquences contenues dans les signaux U0 et I0, k.V1.V2 est une bonne image de la puissance homopolaire instantanée.

En intégrant ce signal durant au moins une demie période de la fréquence fondamentale du réseau, on obtient une grandeur égale à Vs = Uof.Iof.cosφ + Σ Uon.Ion.cosφ n
relation dans laquelle :
Uof.Iof.cosφ représente la puissance active,
Σ Uon.Ion.cosφ n représente la puissance réactive, et
n représente le rang de l'harmonique.

On a également proposé un circuit du type illustré sur la figure 2 comprenant une chaine de mesure de la tension homopolaire, une chaine de mesure du courant homopolaire et un circuit de traitement numérique dont le rôle est de rechercher et d'indiquer la présence d'un défaut homopolaire. Le circuit de traitement détermine la puissance active et la puissance réactive à 50 Hz.

Plus précisément les tension et courant résiduels sont filtrés par un filtre anti-repliement 30, puis échantillonnés dans un module 32, et convertis par un filtrage numérique 34 analogue au calcul des composantes 50Hz d'une transformée de Fourier discrète. A partir des sorties de ce filtre 34, un circuit de traitement numérique 36 calcule des valeurs représentatives de la puissance active et de la puissance réactive homopolaires.

Enfin un indicateur de défaut 38 signale la présence de défauts sur la base d'une comparaison de la puissance active à un seuil, auquel on ajoute une retenue proportionnelle au rapport entre les puissances active et réactive à 50 Hz.

Ces propositions antérieures ne donnent cependant pas totalement satisfaction. Elles s'avèrent en effet assez complexes et ne sont pas toujours fiables.

En particulier les dispositifs de détection connus ne donnent pas totalement satisfaction sur les réseaux à neutre compensé, c'est à dire les réseaux dans lesquels le neutre est relié à la terre par une self servant à compenser les courants réactifs capacitifs engendrés par le couplage capacitif des grandes longueurs de lignes du réseau avec la terre et pour lesquels les courants de défauts à détecter peuvent être inférieurs aux courants réactifs capacitif homopolaires.

La présente invention a maintenant pour but de perfectionnner les dispositifs de détection de défauts homopolaires connus.

Ce but est atteint dans le cadre de la présente invention grâce à un dispositif de détection de défauts homopolaires comprenant :
- un détecteur de passage à zéro de la tension homopolaire et
- un démodulateur de phase du courant homopolaire piloté par un signal issu du détecteur de passage à zéro.

D'autres caractéristiques, buts et avantages de la présente invention apparaitront à la lecture de la description détaillée qui va suivre et en regard des desssins annexés donnés à titre d'exemple non limitatif et sur lesquels :
- les figures 1 et 2 précédemment décrites représentent des dispositifs de détection conformes à l'état de la technique,
- la figure 3 représente la structure d'un réseau de distribution électrique à neutre compensé auquel peut s'appliquer l'invention, et

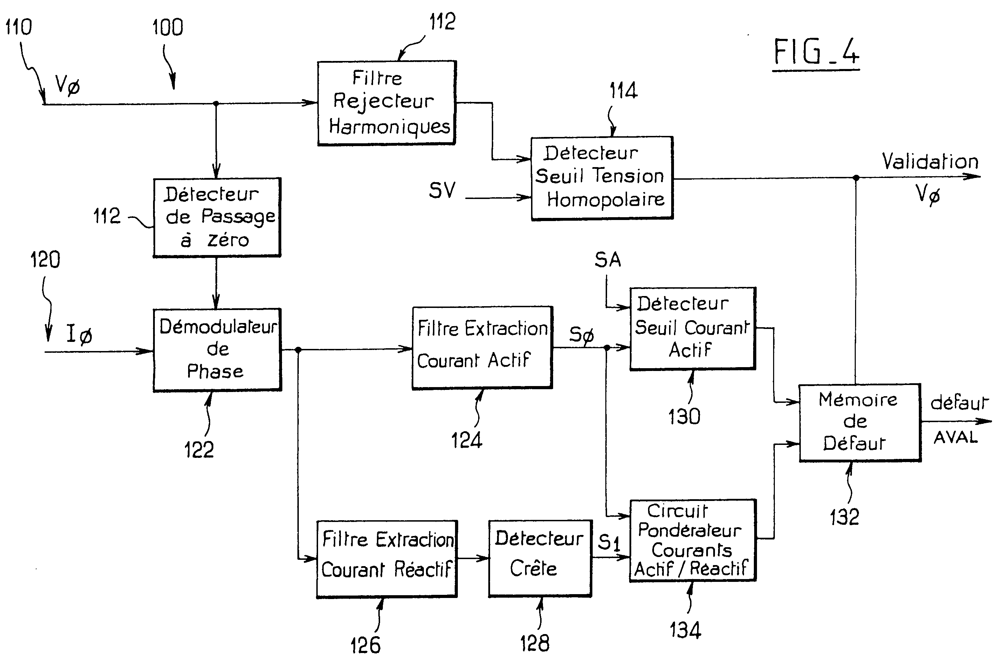

- la figure 4 représente la structure générale d'un dispositif de détection conforme à la présente invention.

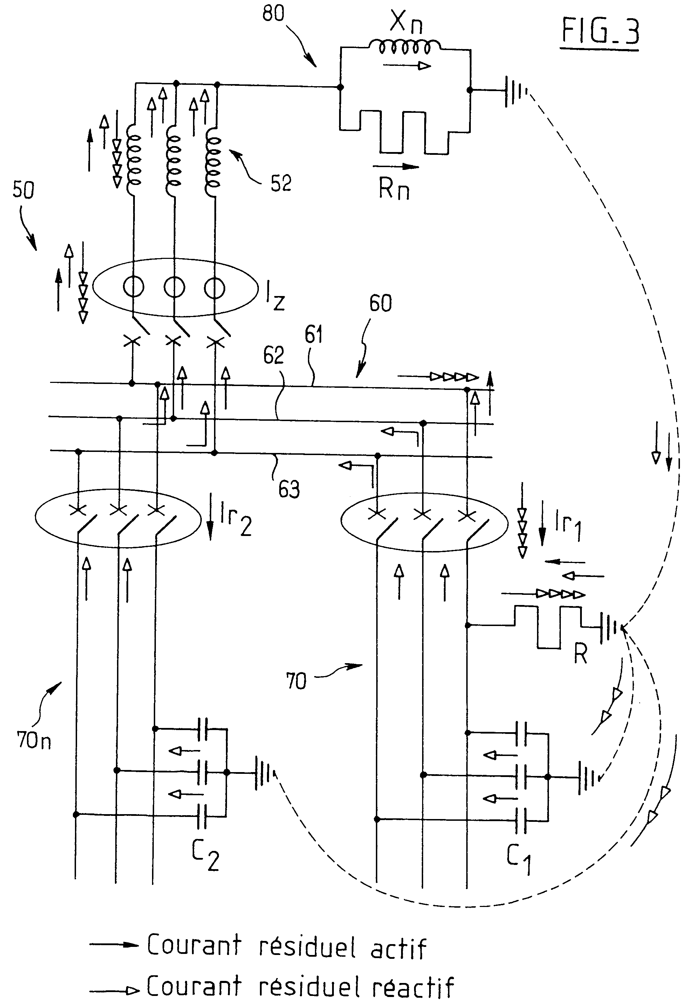

On aperçoit sur la figure 3 un réseau 50 de distribution comprenant un transformateur triphasé 52 dont les secondaires sont reliés aux lignes respectives 61, 62 et 63 d'un jeu de barres 60, lesquelles lignes 61, 62 et 63 sont elles mêmes reliées respectivement aux lignes triphasées de départs 70 à 70n.

Le point commun des secondaires du transformateur 52, connectés en étoile, est relié à la terre par l'intermédiaire d'une self de compensation 80 dont la partie selfique est référencée Xn sur la figure 3, et dont la partie résistive est référencée Rn sur la même figure.

En régime normal équilibré, les courants capacitifs homopolaires dus aux couplages capacitifs C1 à Cn des lignes 70 à 70n avec la terre sont au moins partiellement compensés par le courant résiduel inductif créé par la self de compensation Xn.

Cependant lorsque un défaut R à la terre apparait sur une ligne, celle-ci se comporte comme un générateur homopolaire. Les départs sains sont alors le siège de courants réactifs. Par ailleurs le courant de terre résultant se décompose en un courant actif dans la résistance Rn et un courant réactif dans la self Xn.

On va maintenant décrire la structure du dispositif de détection 100 conforme à la présente invention représenté sur la figure annexée.

Ce dispositif 100 comprend tout d'abord des moyens adaptés pour appliquer sur des entrées respectives 110 et 120 des signaux représentatifs respectivement de la tension homopolaire V0 et du courant homopolaire I0 sur les trois lignes d'un même départ, c'est à dire des signaux représentatifs respectivement de la somme vectorielle des tensions et des courants sur ces lignes.

La tension homopolaire V0 est soumise à un détecteur de passage à zéro 112.

Le courant homopolaire I0 est soumis à un démodulateur de phase 122 piloté par la sortie du détecteur de passage à zéro 112. Plus précisément, dans ce démodulateur 122, le courant homopolaire I0 est soumis à une multiplication par un signal +1 ou -1 selon le signal de sortie du détecteur de passage à zéro 112, c'est à dire selon que la tension homopolaire U0 est supérieure à zéro ou inférieure à zéro.

Par rapport aux solutions antérieures connues, l'utilisation d'un tel démodulateur de phase sur le courant homopolaire piloté par un détecteur de zéro sur la tension homopolaire offre l'avantage de présenter une faible consommation. Cependant l'expérience montre que l'analyse spectrale du signal obtenu à la sortie de ce démodulateur 122 servant de "multiplieur" apporte autant de richesse qu'une analyse spectrale de la puissance homopolaire.

L'extraction du courant actif So est faite par un filtre extracteur de courant actif 124 connecté à la sortie du démodulateur 122. Le filtre 124 peut être formé par exemple d'un filtre passe bas 25Hz du troisième ordre et d'un réjecteur 50Hz.

Le courant actif S0 issu du filtre 124 est comparé, dans un détecteur 130, à un seuil SA. En cas de dépassement de ce seuil SA par le courant actif SO, le détecteur 130 envoie un signal de défaut dans une mémoire de défaut 132.

Toutefois il s'avère que ce critère n'est pas suffisant pour avoir la certitude que le défaut ainsi détecté est aval. Pour cette raison il est proposé dans le cadre de l'invention de conditionner la prise en compte du signal de défaut lié au dépassement du seuil SA, par une pondération courant actif/courant réactif.

A cette fin l'extraction du courant réactif S1, limité à l'harmonique 50Hz, est faite par un filtre extracteur de courant réactif 126 également connecté à la sortie du démodulateur 122, et suivi d'un détecteur de crête 128.

Le filtre 126 peut être formé par exemple d'un filtre passe-bande 100Hz.

Un circuit 134 dont les entrées sont reliées respectivement aux sorties du filtre 124 et du détecteur 128 assure à cet effet une pondération prédéterminée entre le courant actif SO et le courant réactif S1.

A titre très préférentiel mais non limitatif le circuit 134 peut ainsi calculer une fonction S1 - 3 S0. Cette fonction particulière et non limitative résulte d'une analyse du rapport S1/S0 en fonction du déphasage de V0 et I0, effectuée par la Demanderesse.

Tant que la fonction de pondération issue du circuit 134 reste supérieure à zéro, c'est à dire que S1 - 3.S0 > 0, le signal de défaut issu du détecteur 130 n'est pas pris en compte dans la mémoire 132.

Par ailleurs la prise en compte du signal de défaut est prise en compte dans la mémoire lorsque un détecteur de seuil de tension homopolaire 114 indique la présence d'une tension homopolaire supérieure à un seuil.

A cet effet, le détecteur 114 compare le signal issu d'un filtre réjecteur d'harmoniques 112 recevant la tension homopolaire, à un seuil SV.

On comprend à la lecture de la description qui précède que les détecteurs conformes à la présente invention, situés sur des départs présentant un défaut homopolaire et placés en amont de celui-ci, c'est à dire entre le défaut et le transformateur d'alimentation 52, ont leur sortie de la mémoire 132 validée.

En revanche les détecteurs situés en aval du défaut sur le même départ ou sur un départ sain ont uniquement leur sortie du détecteur 114 validée.

Ainsi le défaut peut aisément être localisé par simple analyse des sorties de la mémoire 132 et de la sortie du détecteur 114.

Les capteurs délivrant la tension homopolaire V0 et le courant homopolaire 10 sur les entrées 110 et 120 peuvent être formés de toutes structures appropriées connues de l'homme de l'art.

A titre d'exemples non limitatifs :
- pour un réseau aérien, la tension homopolaire peut être mesurée par une paire de plaques capacitives ou une plaque capacitive unique, par exemple portées par un poteau support des lignes du réseau;
- pour un réseau souterrain, la tension homopolaire peut être mesurée à l'aide d'un module diviseur capacitif, par exemple en prélevant le courant entre la terre et le point commun à des témoins de signalisation reliés par ailleurs aux points milieux de ponts diviseurs capacitifs raccordés entre chaque ligne et la terre. On connait déjà des modules de signalisation comprenant des témoins de signalisation connectés d'un côté, au niveau d'un point commun, à la terre par l'intermédiaire d'une capacité de liaison, et de l'autre côté aux points milieux de ponts diviseurs capacitifs raccordés entre chaque ligne et la terre. Dans ce cas il suffit de raccorder le dispositif de mesure de tension homopolaire, en parallèle de la capacité de liaison. Cette disposition permet de délivrer un signal indépendant de la longueur des liaisons;
- la tension homopolaire peut encore être mesurée par l'intermédiaire d'un ensemble de trois capacités ayant une première borne, de mesure, commune et une seconde borne reliée respectivement à l'une des lignes du réseau;
- pour un réseau aérien, le courant homopolaire peut être mesuré à l'aide d'une antenne bobinée;
- pour un réseau souterrain, le courant homopolaire peut être mesuré à l'aide d'un tore, par exemple attaquant directement un amplificateur basse impédance.

Le dispositif conforme à la présente invention peut être utilisé pour actionner un indicateur de défaut et/ou pour provoquer l'ouverture de la ligne sur laquelle apparait le défaut.

Bien entendu la présente invention n'est pas limitée aux modes de réalisation qui viennent d'être décrits, mais s'étend à toutes variantes conformes à son esprit.

En particulier la présente invention n'est pas limitée aux réseaux compensés, mais peut s'appliquer à tous types de réseaux à la seule exception des réseaux à neutre isolé.

## Revendications

1. Dispositif de détection de défauts homopolaires sur un réseau de distribution électrique, caractérisé par le fait qu'il comprend :
- un détecteur (112) de passage à zéro de la tension homopolaire (V0) et
- un démodulateur de phase (122) du courant homopolaire (I0), piloté par un signal issu du détecteur de passage à zéro (112).

2. Dispositif selon la revendication 1, caractérisé par le fait que le démodulateur de phase (122) opère une multiplication du courant homopolaire (I0) par un signal +1 ou -1 selon que le détecteur de passage à zéro (112) signale que la tension homopolaire (V0) est supérieure à zéro ou inférieure à zéro.

3. Dispositif selon l'une des revendications 1 ou 2, caractérisé par le fait qu'il comprend en outre un détecteur (130) apte à comparer le courant actif (S0) issu du démodulateur de phase (122) avec un seuil prédéterminé (SA).

4. Dispositif selon la revendication 3 caractérisé par le fait qu'il comprend en outre un filtre extracteur de courant actif (124), intercalé entre la sortie du démodulateur de phase (122) et l'entrée du détecteur-comparateur (130).

5. Dispositif selon la revendication 4, caractérisé par le fait que le filtre extracteur de courant actif (124) est composé d'un filtre passe bas et d'un réjecteur de fréquence.

6. Dispositif selon l'une des revendications 1 à 5, caractérisé par le fait qu'il comprend en outre un module (134) de calcul d'une pondération courant actif/courant réactif.

7. Dispositif selon la revendication 6, caractérisé par le fait que le module (134) de calcul reçoit le signal de courant réactif (S1) en provenance d'un filtre d'extraction de courant réactif (126) dont l'entrée est reliée à la sortie du démodulateur de phase (122).

8. Dispositif selon la revendication 7, caractérisé par le fait que le filtre d'extraction de courant réactif (126) est formé d'un filtre passe bande.

9. Dispositif selon l'une des revendications 7 ou 8, caractérisé par le fait qu'un détecteur de crête (128) est intercalé entre le filtre d'extraction de courant réactif (126) et le module de calcul (134).

10. Dispositif selon l'une des revendications 6 à 9, caractérisé par le fait que le module de calcul (134) calcul la pondération S1 - 3.S0, dans laquelle S1 représente le courant réactif et SO représente le courant actif.

11. Dispositif selon l'une des revendications 6 à 10, caractérisé par le fait que le module de calcul (134) agit sur une mémoire de défaut (132) pour ne valider la prise en compte d'un défaut que dans l'hypothèse ou le signal de courant actif (S0) est inférieur d'un rapport prédéterminé au courant réactif (S1).

12. Dispositif selon l'une des revendications 1 à 11, caractérisé par le fait qu'il comprend en outre un détecteur de tension homopolaire (114) qui compare la tension homopolaire reçue en entrée à un seuil prédéterminé.

13. Dispositif selon la revendication 12, caractérisé par le fait que le détecteur de tension homopolaire (114) est précédé d'un filtre réjecteur d'harmoniques (112).

14. Dispositif selon l'une des revendications 12 ou 13, caractérisé par le fait que le filtre réjecteur d'harmoniques (112) agit sur une mémoire de défaut (132) pour ne valider la prise en compte d'un défaut que dans l'hypothèse ou le signal de tension homopolaire dépasse le seuil prédéterminé.
